# EUROPEAN PATENT SPECIFICATION

(11) **EP 2 115 214 B1**
(45) Date of publication and mention of the grant of the patent: **08.06.2011**
(21) Application number: 08713338.5
(22) Date of filing: 30.01.2008
(51) Int. Cl.: D06N 7/00, C08J 9/00, C09D 125/10, C08K 3/26, C08K 5/41

(54) **CARPET BACKING COMPOSITION**
TRAGEZUSAMMENSETZUNG FÜR TEPPICHE
COMPOSITION DE SUPPORT DE TAPIS

(30) Priority: 31.01.2007 US 898616 P
(43) Date of publication of application: 11.11.2009
(73) Proprietor: Styron Europe GmbH, 8810 Horgen (CH)
(72) Inventor: BERGMAN, Roger, W., Midland, MI 48642 (US); ERDEM, Bedri, Midland, MI 48640 (US); MARTIN, Dominique, Erps-Kwerps, 3071 Belgium (BE)
(74) Representative: Grünecker, Kinkeldey, Stockmair & Schwanhäusser Anwaltssozietät
(86) International application number: PCT/US2008/001235
(87) International publication number: WO 2008/094605

(56) References cited:
- WO-A-00/49075
- US-A- 3 817 899
- DATABASE WPI Week 198844 Thomson Scientific, London, GB; AN 1988-310953 XP002486076 -& JP 63 227875 A (JAPAN SYNTHETIC RUBBER CO LTD) 22 September 1988 (1988-09-22)

## Description

This application claims priority from U.S. Provisional Application Serial No. 60/898,616, filed January 31, 2007, the entire content of which is incorporated herein by reference.

### Field of the Disclosure

The present disclosure relates generally to carpet backing compositions, carpet products made using the carpet backing compositions, and methods for producing a carpet product which use a carpet backing composition.

### Background

Most conventional carpets comprise a primary backing with yam tufts in the form of cut or uncut loops extending upwardly from the backing to form a pile surface. In the case of tufted carpets, the yam is inserted into a primary backing by tufting needles and then a pre-coat or binder is applied thereto. In the case of non-tufted or bonded pile carpets, the fibers are embedded and held in place by the binder composition.

In both cases, the carpet construction usually also includes a secondary backing bonded to the primary backing. The secondary backing can provide extra padding to the carpet, absorb noise, add dimensional stability and often function as a heat insulator. The secondary backing, typically either a foam sheet or a woven fabric, is laminated to the primary backing by a binder composition applied to the tuft-lock coated primary backing or applied directly to the secondary backing. Similar techniques are used in the preparation of broadloom carpet as well as carpet tiles.

The physical properties of the binder are important to successful utilization as a carpet backing coating. In this regard, there are a number of important requirements that must be met by such a coating. It must be capable of being applied to the carpet and dried using the processes and equipment conventionally employed in the carpet industry. It must provide excellent adhesion to the pile fibers to secure them firmly to the backing, both in tufted and non-tufted constructions. The coating must also have low smoke density values and high flame retardant properties and must accept a high loading of traditional fillers such as calcium carbonate, aluminum trihydrate, barite and feldspar. Furthermore, the coating must maintain sufficient softness and flexibility, even with high filler loading or at low temperature, to enable the carpet, if prepared in broadloom form, to be easily rolled and unrolled during installation. The softness and flexibility properties will vary depending on the style of carpet but, in all cases, it is important that the carpet will lie flat and not exhibit a tendency to curl or dome.

In the application of the coating composition to a carpet substrate, it is often advantageous to froth or foam the coating composition with a gas, typically air, before application. The gas is incorporated into the coating composition by mechanical frothing. A coating composition froths well if the desired compound froth density or air content can be obtained quickly and reproducibly. In preparing the frothed coating composition, the typical process involves mixing all the components and then blending the gas into the mixture using mixing equipment. Frothing aids are commonly added to the coating composition to modify the rate and extent to which air is entrapped. The frothing aid typically is a surface active agent or surfactant, such as sodium lauryl sulfate or ammonium lauryl sulfate. However, surfactants in use today either increase frothing with an increase in froth stability or decrease frothing with a decrease in froth stability.

Frothing of the coating composition aids in coat weight control. It is important that the froth collapse after application of the coating composition but before drying of the coating is complete. This collapse is necessary to obtain good binding to the secondary backing. If the froth does not collapse sufficiently a foam structure remains which can have much poorer secondary backing adhesion.

It would be desirable to have a coating composition for use in the manufacture of carpet and carpet tile, such that the coating composition would froth or foam well, be sufficiently stable to obtain good coating weight control, and collapse well at some point after coating or early in the drying process (before voids are set in place by the dried compound).

### Summary

This disclosure pertains to carpet backing compositions, which may also be described as a carpet coating compositions, that may include a binding amount of a polymeric binder, a filler, and a foaming surfactant which includes at least one anionic surfactant selected from the group consisting of a linear and/or branched alkyl sulfates having an average 8 to 10 carbon atoms in the alkyl moiety, and a linear and/or branched C₈ to C₁₀ alkyl sulfonates having an average 8 to 10 carbon atoms in the alkyl moiety. The carpet backing compositions may also include a thickener.

Another aspect of the disclosure includes carpet products made using the carpet backing compositions disclosed herein. A method for producing a carpet product that makes use of the carpet backing compositions is also contemplated.

Surprisingly, compared to known carpet coating compositions, the compositions of this disclosure exhibits increased frothing or foaming, and exhibits decreased froth or foam stability such that the foam gradually collapses after application of the coating composition but before drying of the coating is complete.

### Detailed Description

The carpet coating compositions, disclosed herein, may include a polymeric binder, a foaming surfactant, a filler, and optionally a thickener. While in the carpet industry the term "foam" refers to a filler-free material and the term "froth" usually refers to a filled material, the terms "foam" and "froth" are used interchangeably herein.

For the purposes of the present disclosure, the term "dry" means in the substantial absence of water and the term "dry basis" refers to the weight of a dry material.

For the purposes of the present disclosure, the term "copolymer" means a polymer derived from more than one species of monomer. As used herein, "Tg" is an abbreviation for glass transition temperature. For the purposes of the present disclosure, the term "low Tg monomer" means a monomer, which when homopolymerized, gives a homopolymer having a Tg of less than 10 °C, and the term "high Tg monomer" means a monomer, which when homopolymerized, gives a homopolymer having a Tg of at least 10 °C.

For the purposes of the present disclosure, the term "(meth)" indicates that the methyl substituted compound is included in the class of compounds modified by that term. For example, the term (meth)acrylic acid represents acrylic acid and methacrylic acid.

As used herein, "pphm" is an abbreviation for parts by weight per 100 parts by weight of the monomers.

As used herein "°C" is an abbreviation for degrees Celsius.

As used herein "g" is an abbreviation for gram(s).

As used herein "cP" is an abbreviation for centipoise.

As used herein "cc" is an abbreviation for cubic centimeter.

As used herein, "alkyl" refers to a hydrocarbon group having the general formula CₙH₂ₙ₊₁, where n is the number of carbon atoms.

As used herein, "a," "an," "the," "at least one," and "one or more" are used interchangeably. The terms "comprises" and variations thereof do not have a limiting meaning where these terms appear in the description and claims. Thus, for example, a carpet backing composition that comprises "a" polymeric binder can be interpreted to mean that the polymeric binder includes "one or more" polymeric binders.

Also herein, the recitations of numerical ranges by endpoints include all numbers subsumed within that range (e.g., 1 to 5 includes 1, 1.5, 2, 2.75, 3, 3.80, 4, 5, etc.).

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

The polymeric binder employed in the carpet backing compositions of the present disclosure advantageously includes a synthetic latex. The polymeric binder may include a dispersion of a polyolefin and/or a polyurethane. A synthetic latex, as is well known, is an aqueous dispersion of polymer particles prepared by emulsion polymerization of one or more monomers. For the purposes of the disclosure, a synthetic latex is employed such that the polymeric binder has sufficient adhesive properties for use in the manufacture of carpet products. Polymeric binders for use in the preparation of carpet are well known and are widely commercially available.

The polymeric binder is employed in a binding amount, i.e. the polymeric binder functions to hold the fiber tufts in place, adhere the secondary backing to the fiber construction, and/or to provide dimensional stability to the final carpet structure. The Tg of the polymeric binder can vary based upon the particular application involved. Advantageously, the polymeric binder has a Tg of from about -20 °C to about 30 °C, preferably from about -15 °C to about 20 °C, and more preferably from about -10 °C to about 10 °C.

The polymer of the polymeric binder can be a homopolymer, but preferably is a copolymer. The copolymer can be prepared from a combination of more than one species of monomers that give the desired binder properties for the intended application. Mixtures of monomers can be employed. For example, the copolymer can be prepared from a combination of one or more low Tg monomers, one or more high Tg monomers, and a functional comonomer.

Examples of low Tg monomers include monomers having a Tg of less than 10 °C that are dienes, C₁ -C₁₀ alkyl esters of acrylic acid, C₂ -C₁₀ alkyl esters of alpha, beta-ethylenically unsaturated C₄ -C₆ monocarboxylic acids, C₄ -C₁₀ dialkyl esters of alpha, beta-ethylenically unsaturated C₄ -C₈ dicarboxylic acids, and vinyl esters of carboxylic acids, including, without limitation, vinyl isobutyrate, vinyl-2-ethyl-hexanoate, vinyl propionate, vinyl isooctanoate and vinyl versatate. Preferably, the low Tg monomer is selected from the group consisting of dienes, C₁-C₁₀ alkyl esters of (meth)acrylic acid i.e. alkyl (meth)acrylates, and C₄ -C₈ dialkyl esters of maleic, itaconic and fumaric acids. Particularly preferred low Tg monomers include butadiene, isoprene, ethyl acrylate, butyl acrylate, 2-ethyl hexyl acrylate, decyl acrylate, dibutyl maleate and dioctyl maleate, with butadiene being most preferred.

Examples of high Tg monomers include styrene, alpha-methyl styrene, vinylidene chloride, methyl methacrylate, dimethyl maleate, t-butyl methacrylate, t-butyl isobornyl acrylate, phenyl methacrylate, acrylonitrile and vinyl esters of carboxylic acids having a Tg of 10 °C or greater. Examples of such vinyl esters include vinyl pivalate, vinyl neodecanoate, vinyl neononanoate, and mixtures of branched vinyl esters such as the commercially available VEOVA 11 and EXXAR NEO-12. Styrene is the most preferred high Tg monomer. In one embodiment, the synthetic latex includes copolymerized styrene and butadiene (e.g., 1, 3-butadiene) monomers.

It may also be desirable to incorporate, in the polymeric binder, one or more functional comonomers. Suitable copolymerizable functional comonomers include, for example: acrylic acid; methacrylic acid; itaconic acid; fumaric acid ; the half esters of maleic acid, such as monoethyl, monobutyl or monooctyl maleate; acrylamide; tertiary octylacrylamide; N-methylol (meth)acrylamide; N-vinylpyrrolidinone; diallyl adipate; triallyl cyanurate; butanediol diacrylate; allyl methacrylate; etc.; as well as C₂-C₃ hydroxyalkyl esters such as hydroxyethyl acrylate, hydroxy propyl acrylate and corresponding methacrylates. The functional comonomer generally is used at levels of less than 5 pphm, preferably less than 3 pphm, depending upon the nature of the specific comonomer.

In addition, certain copolymerizable monomers that assist in the stability of the polymeric binder, e.g., vinyl sulfonic acid, sodium vinyl sulfonate, sodium styrene sulfonate, sodium allyl ether sulfate, sodium 2-acrylamide-2-methyl-propane sulfonate (AMPS), 2-sulfoethyl methacrylate, and 2-sulfopropyl methacrylate, can be employed as emulsion stabilizers. These optional monomers, if employed, are advantageously added in amounts from about 0.1 pphm to about 2 pphm.

Methods for preparing synthetic latexes are known in the art and these procedures can be used.

Suitable free radical polymerization initiators are the initiators capable of promoting emulsion polymerization and include water-soluble oxidizing agents, such as, organic peroxides (e.g., t-butyl hydroperoxide, cumene hydroperoxide, etc.), inorganic oxidizing agents (e.g., hydrogen peroxide, potassium persulfate, sodium persulfate, ammonium persulfate, etc.) and those initiators that are activated in the water phase by a water-soluble reducing agent. Such initiators are employed in an amount sufficient to cause polymerization. Generally, a sufficient amount is from about 0.1 pphm to about 5 pphm. Alternatively, redox initiators may be employed, especially when polymerization is carried out at lower temperatures. For example, reducing agents may be used in addition to the persulfate and peroxide initiators mentioned above. Typical reducing agents include, but are not limited to: alkali metal salts of hydrosulfites, sulfoxylates, thiosulfates, sulfites, bisulfites, reducing sugars such as glucose, sorbose, ascorbic acid, erythorbic acid, and the like. In general, the reducing agents are used at levels from about 0.01 pphm to about 5 pphm. Many of such initiators are known to those skilled in the art. Mixtures of initiators can be employed.

For the purposes of this disclosure, a primary surfactant is a surfactant that is a component of the polymeric binder composition, e.g. was used in the reactor during polymerization of the polymeric binder. The primary surfactant can be the surfactants generally used in emulsion polymerization. The primary surfactant can be anionic, nonionic, or mixtures thereof. The terms "surfactant," "emulsifying agent" and "emulsifier" are used interchangeably herein.

Suitable nonionic emulsifiers include polyoxyethylene condensates. Exemplary polyoxyethylene condensates that can be used include polyoxyethylene aliphatic ethers, such as polyoxyethylene lauryl ether and polyoxyethylene oleyl ether; polyoxyethylene alkaryl ethers, such as polyoxyethylene nonylphenol ether and polyoxyethylene octylphenol ether; polyoxyethylene esters of higher fatty acids, such as polyoxyethylene laurate and polyoxyethylene oleate, as well as condensates of ethylene oxide with resin acids and tall oil acids; polyoxyethylene amide and amine condensates such as N-polyoxyethylene lauramide, and N-lauryl-N-polyoxyethylene amine and the like; and polyoxyethylene thio-ethers such as polyoxyethylene n-dodecyl thio-ether.

Nonionic emulsifying agents that can be used also include a series of surface active agents available from BASF under the PLURONIC and TETRONIC trade names. In addition, a series of ethylene oxide adducts of acetylenic glycols, sold commercially by Air Products under the SURFYNOL trade name, are suitable as nonionic emulsifiers.

Suitable anionic emulsifiers include the alkyl aryl sulfonates, alkali metal alkyl sulfates, the sulfonated alkyl esters, and fatty acid soaps. Specific examples include sodium dodecylbenzene sulfonate, sodium butylnaphthalene sulfonate, sodium lauryl sulfate, disodium dodecyl diphenyl ether disulfonate, N-octadecyl sulfosuccinate and dioctyl sodiumsulfosuccinate. The emulsifiers are employed in amounts effective to achieve adequate emulsification of the polymer in the aqueous phase and to provide desired particle size and particle size distribution.

Other ingredients known in the art to be useful for various specific purposes in emulsion polymerization, such as, acids, salts, chain transfer agents, chelating agents, buffering agents, neutralizing agents, defoamers and plasticizers also may be employed in the preparation of the polymeric binder. For example, if the polymerizable constituents include a monoethylenically unsaturated carboxylic acid monomer, polymerization under acidic conditions (pH 2 to pH 7, preferably pH 2 to pH 5) is preferred. In such instances the aqueous medium can include those known weak acids and their salts that are commonly used to provide a buffered system at the desired pH range.

Various protective colloids may also be used in place of or in addition to the emulsifiers described above. Suitable colloids include casein, hydroxyethyl starch, carboxyxethyl cellulose, carboxymethyl cellulose, hydroxyethylcellulose, gum arabic, alginate, poly(vinyl alcohol), polyacrylates, polymethacrylates, styrene-maleic anhydride copolymers, polyvinylpyrrolidones, polyacrylamides, polyethers, and the like, as known in the art of emulsion polymerization technology. In general, when used, these colloids are used at levels of 0.05% to 10% by weight based on the total weight of the reactor contents.

The manner of combining the polymerization ingredients can be by various known monomer feed methods, such as, continuous monomer addition, incremental monomer addition, or addition in a single charge of the entire amounts of monomers. The entire amount of the aqueous medium with polymerization additives can be present in the polymerization vessel before introduction of the monomers, or alternatively, the aqueous medium, or a portion of it, can be added continuously or incrementally during the course of the polymerization.

Following polymerization, the solids content of the resulting aqueous polymer binder dispersion can be adjusted to the level desired by the addition of water or by the removal of water by distillation. Generally, the desired level of binder solids content is from about 40 weight percent to about 75 weight percent based on the total weight of the binder, more preferably from about 50 weight percent to about 70 weight percent based on the total weight of the polymeric binder.

The filler employed can be a filler suitable for use in carpet manufacture. Many of such fillers are known to those skilled in the art, and many are widely commercially available. Examples of mineral fillers or pigments include those known in the art, such as calcium carbonate, fly ash, ground glass, clay, kaolin, talc, barites, feldspar, titanium dioxide, calcium aluminum pigments, satin white, synthetic polymer pigment, zinc oxide, barium sulphate, gypsum, silica, alumina trihydrate, mica, hollow polymer pigments, and diatomaceous earth. Mixtures of fillers can be employed.

The amount of filler that is employed in the preparation of the carpet backing composition can vary depending upon the density of the filler and the coating properties desired. The amount of filler employed in the carpet backing composition of the present disclosure advantageously is from about 50 to about 800 dry weight parts per 100 dry weight parts of polymeric binder, and preferably from about 100 to about 600 dry weight parts per 100 dry weight parts of polymeric binder.

For the various embodiments, the carpet backing composition can include a foaming surfactant, but may also include a surfactant used in the polymerization of the polymeric binder. For example, when a latex is incorporated into the composition as a binder, a surfactant, if any, that was used in the preparation of that latex also becomes part of the carpet backing composition. For the purposes of this disclosure, a foaming surfactant is a surfactant, as described herein, that is a component of the carpet backing composition that improves frothing and improves the collapse time of the frothed carpet backing composition. The foaming surfactant can be added directly to the binder or can be added to the carpet backing composition prior to use. In one embodiment, the primary surfactant and the foaming surfactant can be the same surfactant in terms of chemical structure. For example, if the primary surfactant is sodium octyl sulfate, then additional sodium octyl sulfate can be added to the coating composition as the foaming surfactant. The foaming surfactant can be a mixture of surfactants. The foaming surfactant can be anionic, nonionic, or mixtures thereof.

The foaming surfactant of this disclosure advantageously is a surfactant being at least one anionic surfactant selected from the group consisting of linear and/or branched alkyl sulfate and linear and/or branched alkyl sulfonates having.

The amount of foaming surfactant employed will vary from latex to latex and formulation to formulation but is an amount that is effective in achieving the desired frothed (foamed) compound density or air content. For a carpet backing frothed application, the densities are advantageously between 5% and 95% air by volume and preferably 30% to 80% air by volume. The extent of frothing is commonly expressed as percent air entrapment or froth density. For example, 50 percent air entrapment corresponds to an amount of air such that if a specified volume of unfrothed composition weighs 200 grams, then the same volume of frothed composition would weigh 100 grams. Alternatively, the froth density can be determined by determining the mass of a specified volume of compound. The amount of foaming surfactant employed advantageously is from about 0.05 to about 3 dry weight parts per 100 dry weight parts of the polymeric binder and preferably is from about 0.1 to about 1.5 dry weight parts per 100 dry weight parts of the polymeric binder.

Carpet coating compositions may have various percent (%) by weight concentrations of binder and filler. For example, a composition may have 11% to 67% by weight of the binder and 33% to 89% by weight of filler, based on the total weight of binder and filler. Preferably, the carpet coating compositions contain 14% to 50% by weight of the binder and 50% to 86% by weight of filler based on the total weight of binder and filler.

If desired, conventional additives may be incorporated into a carpet backing composition of the disclosure in order to modify the properties thereof. Examples of these additives include thickeners, catalysts, dispersants, chelating agents, colorants, biocides, anti-foaming agents, and the like. Examples of known dispersants, thickeners, antimicrobials, antioxidants, chelating agents and defoamers (anti-foamers) are listed in "2002 McCutcheon's Volume 2: Functional Materials," McCutcheon's Division, MC Publishing Co., 175 Rock Road, Glen Rock, NJ 07452 USA. Common surfactants are listed in "2002 McCutcheon's Volume 1: Emulsifiers and Detergents."

A carpet coating composition of the present disclosure advantageously can be used in the production of conventional tufted carpet, non-tufted carpet and needle-punched carpet and can be dried using equipment that is known to those skilled in the art, such as that used in carpet mills. Thus, the carpet coating composition may be useful in the production of pile carpets having a primary backing with pile yarns extending from the primary backing to form pile tufts; as well as non-tufted carpets wherein the fibers are embedded into the binder composition that has been coated onto a woven or non-woven substrate.

The carpet coating composition may be employed in the manufacture of carpet according to techniques well known to those skilled in the art.

In preparing a tufted carpet, the yarn is tufted or needled into a primary backing, which is generally non-woven polypropylene, polyethylene or polyester or woven jute or polypropylene. If a secondary backing is used, it is generally formed of woven or non-woven materials similar to those used as the primary backing. Such a secondary backing provides dimensional stability to the carpet. The secondary backing can be in the form of a foam polymer or copolymer. Suitable foam compositions include urethane polymers, polymers and copolymers of ethylene, propylene, isobutylene and vinyl chloride. When a foam secondary backing is used, it can be prefoamed and then laminated onto the primary backing, or it can contain a thermally activatable blowing agent and can be foamed immediately prior to lamination or after lamination. Additionally, the secondary backing can exhibit thermoplastic adhesive properties of its own, and the secondary backing can be preheated prior to lamination to render the surface thereof adhesive. Alternatively, the secondary backing can be a hot melt, one or more or fused PVC plastisol layer(s) or bitumen, often in conjunction with fiberglass scrim or other scrim known to provide dimensional stability. It is also contemplated that the compositions disclosed herein can be used as the pre-coat binder and as the secondary backing binder. The pre-coat layer can optionally be dried before the secondary backing binder is applied. The secondary backing binder can be applied to either the pre-coated griege or to the secondary backing.

In forming a non-tufted carpet, the carpet coating composition is generally thickened to a viscosity of about 2,000 cP to about 75,000 cP and applied to a scrim surface. The fibers then are directly embedded into the wet coating using conventional techniques and then dried. Again, a secondary coating similar to that described above is desirably employed.

The composition of the disclosure is easier to apply to the carpet than hot melt thermoplastic adhesives that require expensive and complex machines and processes to apply a coating, and the coating also penetrates the fibers of the carpet yarns to yield better adhesion, fiber bundle integrity and anti-fuzzing properties. The term "tuft-bind" refers to the ability of the carpet coating composition to lock and secure the pile yam tufts to the primary backing and is determined as set forth herein. Tuft-bind is also used to include the superior characteristics needed in non-tufted coatings wherein the adhesion of the fiber pile is achieved solely by the backing. Suitable tuft-bind properties can be achieved by applying an amount of the carpet coating composition ranging from about 10 ounces per square yard to about 40 ounces per square yard (dry basis), which results in a carpet having a tuft-bind value of at least 6 pounds force for loop carpet (3 pounds for cut pile), and in many instances a tuft-bind value of 15 pounds force or greater.

The present disclosure also provides a method of preparing a pile or tufted carpet that may include tufting or needling the yarn into a woven or non-woven backing; applying the frothed carpet backing composition of the present disclosure to the rear of the carpet backing such that the yarn is embedded in the carpet backing composition; and drying the carpet backing composition applied to the carpet backing.

In producing such tufted carpets it is also desirable to apply a secondary backing to the primary backing either before or after drying of the carpet pre-coat, depending upon the type of backing employed. It is also possible to employ an additional frothed or unfrothed coating to the carpet griege or secondary backing during carpet manufacture.

Non-tufted carpets also can be prepared utilizing the carpet coating compositions of the disclosure by a method that can include coating a composition of the present disclosure onto a substrate; embedding the carpet fibers in the substrate; and drying the resultant carpet construction.

These non-tufted carpets also can be advantageously prepared utilizing a secondary backing to provide additional dimensional stability.

Carpet prepared using a composition of this disclosure advantageously is substantially free of a porous structure in the coating.

### Specific Embodiments of the Invention

The following examples are given to illustrate compositions and should not be construed as limiting in scope. All parts and percentages are by weight unless otherwise indicated.

### MATERIALS

The following materials are used in the carpet backing compositions:
Filler A: dry calcium carbonate MW101 from O-N Minerals, Filler Products Operation, Chatworth, GA, USA
Latex A: carboxylated styrene-butadiene latex (XZ 92229.00 Experimental Latex, available from The Dow Chemical Company), 52% solids in water.
Surfactant (A): sodium lauryl sulfate (CALIMULSE SLS available from Pilot Chemical Company, Santa Fe Springs, CA). 30% active
Surfactant (B): sodium octyl sulfate (POLYSTEP B29 from Stepan, Northfield, IL), 32.5% active.
Surfactant (C): sodium 2-ethylhexyl sulfate (STEPANOL EHS from Stepan, Northfield, IL), 39.5% active.
Surfactant (D): sodium octyl sulfonate (BIOTERGE PAS-8S from Stepan, Northfield, IL), 37.5% active.
Surfactant (E): sodium C₈-C₁₀ sulfate (ALFOL C₈-C₁₀ from Stepan, Northfield, IL), 32% active.
Surfactant (F): sodium decyl sulfate (POLYSTEP B25 from Stepan, Northfield, IL), 37.5% active
Thickener A: proprietary sodium polyacrylate thickener (PARAGUM 265 from Para-Chem Standard Division, Dalton, GA.

### TEST METHODS

The following test procedures are used to evaluate carpet backing compositions of the present disclosure.

Brookfield Viscosity - The viscosity is measured at room temperature (about 20 °C) using a Brookfield RVT viscometer (available from Brookfield Engineering Laboratories, Inc., Stoughton, Massachusetts, USA). Speed and spindle type are indicated with the corresponding data.

Foam Density - The extent of foaming is expressed as foam density. The foamed material is transferred into a 100 cc cup and the mass is determined. The mass obtained is multiplied by 10, and is the foam density in grams/liter.

### Examples 1-10 and Comparative Experiment A-D: Latex Foaming and Foam Stability:

200 grams of Latex A is foamed in a HOBART N50 industrial mixer equipped with a model D modified wire-loop whisk (the five shortest wires removed) and a 5-liter stainless steel mixing bowl. The density of the foam is measured at I minute and 6 minutes to obtain a measure of how fast the foam is generated and the air content. This material is discarded and another sample of the latex is foamed to a density of 155 grams/liter in order to test stability at equivalent foam density. This foam is transferred to a beaker. The % stability of the foam is measured at 30 minutes by dividing the froth volume at 30 minutes by the starting froth volume and multiplying by 100. A lower % volume of foam remaining indicates lower froth stability.

The effect of different surfactant additives is determined by adding the surfactant to the latex before the foam testing. The amount added is measured in parts of dry surfactant per 100 parts of dry latex solids. For example to calculate the mass in grams of active surfactant needed to obtain 0.5 part of a 30% solids surfactant in a 50% solids latex, divide the parts of surfactant desired by the percent surfactant solids, then multiply the result by the percent latex solids and then multiply the new result by the grams of latex, then divide by 100 (in this case 0.5 parts surfactant would be 1.66 grams of 30% surfactant in 200 grams of 50% solids latex).

The preceding procedure is conducted without a foaming surfactant (Comparative Experiment A), with sodium lauryl sulfate (Comparative Experiment B) and with 0.25 part of Surfactants B, C, D, E and F. The results are shown in Table 1.

| **Table 1 - Latex Foamability and Foam Stability** | | | | | | | |
|---|---|---|---|---|---|---|---|
| Latex A with the noted Surfactants added at 0.25 parts | | | | | | | |
| | | | | | | | |
| | Comp. Expt. | Exp't | Exp't | Exp't | Ref. Exp't (*) | Ref. Exp't (*) | Comp. Expt. |
| Surfactant | None | (B) | (C) | (D) | (E) | (F) | (A) |
| Surfactant Level | 0 | 0.25 | 0.25 | 0.25 | 0.25 | 0.25 | 0.25 |
| **Foam Formation** | | | | | | | |
| Foam Density (1 min), g/L | 245 | 100 | 90 | 117 | 123 | 133 | 197 |
| Foam Density (6 min), g/L | 145 | 75 | 69 | 80 | 83 | 82 | 110 |
| | | | | | | | |
| **Foam Stability** | | | | | | | |
| % Volume Retention at 30 min. | 95 | 89 | 89 | 95 | 94 | 95 | 95 |

| | | | | | | | |
|---|---|---|---|---|---|---|---|
| (*) Ref. Expt. | | | | | | | |

The preceding procedure is repeated except that 0.5 part of the surfactants is employed, and the results are shown in Table 2. Comparative Experiments C and D are with no surfactant and with sodium lauryl sulfate, respectively.

| **Table 2 - Latex Foamability and Foam Stability** | | | | | | | |
|---|---|---|---|---|---|---|---|
| Latex A with the noted Surfactants added at 0.5 parts | | | | | | | |
| | | | | | | | |
| | Expt. C | Comp. Ex 6 | Ex 7 | Ex 8 | Ref. Ex 9(*) | Ref. Ex 10(*) | Comp. Exit. D |
| Surfactant | None | (B) | (C) | (D) | (E) | (F) | (A) |
| Surfactant Level (pts) | 0 | 0.5 | 0.5 | 0.5 | 0.5 | 0.5 | 0.5 |
| | | | | | | | |
| Froth | | | | | | | |
| Froth Density (1 min), g/L | 245 | 61 | 59 | 78 | 76 | 90 | 166 |
| Froth Density (6 min), g/L | 145 | 54 | 51 | 64 | 62 | 73 | 95 |
| | | | | | | | |
| **Froth** | | | | | | | |
| % Volume Retention at 30 min. | 95 | 57 | 66 | 73 | 73 | 74 | 99 |

| | | | | | | | |
|---|---|---|---|---|---|---|---|
| (*) Ref. Expt. | | | | | | | |

The data indicates that (C₈ to C₁₀) alkyl sulfates and alkyl sulfonates, particularly the C₈ alkyl sulfates and sulfonates, provide better foaming with less foam stability than sodium lauryl sulfate, a surfactant commonly used in carpet manufacture.

### Examples 11 and 12 and Comparative Examples E and F: Compound Foamability and Foam Stability

A carpet coating composition is prepared by adding ingredients in the order listed in Table 3. The latex and sufficient water to provide 80% final compounds solids are added to a mixing container. The calcium carbonate and surfactant are added separately with 1 minute of mixing after each addition. The thickener is added and the resulting mixture is stirred slowly for 5 minutes at a rate which is insufficient to cause entrainment of air. The viscosity of the mixture obtained thereby is determined with a Brookfield RVT Viscometer using spindle #5 at 20 rpm.

600 grams of each filled carpet coating composition is foamed in a Hobart N50 industrial mixer equipped with a model D modified wire-loop whisk (the five shortest wires removed) and a 5-liter stainless steel mixing bowl. The density of the foam is measured at I minute, 6 minutes and 15 minutes to obtain a measure of how fast the foam is generated and the ultimate air content. This 15 minute foam is drawn down on a glass plate. The stability of the foam is rated visually. This data is shown in Table 3. Comparative Examples E and F contain 0.2 and 0.4 parts of sodium lauryl sulfate (Surfactant (A)) respectively. Experiments 11 and 12 contain 0.2 and 0.4 parts of sodium octyl sulfate (Surfactant (B)).

| **Table 3 - Compound Foamability and Foam Stability** | | | | |
|---|---|---|---|---|
| Compounds with the noted Surfactants added (Formulation below) | | | | |
| | | | | |
| | Comp. Expt. E | Comp. Expt. F | Exp't | Exp't |
| Surfactant | Surfactant (A) | | Surfactant (B) | |
| Surfactant Level | 0.2 | 0.4 | 0.2 | 0.4 |
| | | | | |
| Initial Foam Density, g/Liter | 1650 | 1650 | 1660 | 1660 |
| Froth Density (1 min), g/Liter | 1480 | 1310 | 1410 | 1265 |
| Foam Density (6 min), g/Liter | 1005 | 600 | 555 | 475 |
| | | | | |
| Foam Density (15 min), g/Liter | 690 | 575 | 540 | 475 |
| | | | | |
| | | | | |
| **Foam Stability Rating*** | 1 | 1 | 3 | 3 |
| | | | | |
| **Formulation** | **parts** | | | |
| Latex | 100 | | | |
| Calcium Carbonate (MW 101) | 400 | | | |
| surfactant (A or B) | 0.2 or 0.4 | | | |
| Paragum 265 (polyacrylate Thickener) To 4000 cps (about 0.5 pts) | | | | |

| | | | | |
|---|---|---|---|---|
| *Rating Scale (Visual Observation) 1 - stable (no froth collapse in 5 minutes) 2 - slightly unstable 3 - moderately stable (about 50% froth collapse in 5 minutes) 4 - unstable 5 - very unstable (total froth collapse in 5 | | | | |

The data indicates that carpet backing compositions (compounds) that are made with sodium octyl sulfate foam faster, to a greater air content (i.e. have lower density), and have lower stability than those that are made with sodium lauryl sulfate.

## Claims

1. A carpet backing composition, comprising:
a binding amount of a polymeric binder;
a filler; and
a foaming surfactant that consists essentially of a linear or branched alkyl sulfate or sulfonate having a chain length of primarily eight carbon atoms.

2. The composition of claim 1, where the carpet backing composition includes a thickener, and the anionic surfactant is sodium octyl sulfate.

3. The composition of claims 1-2, where the foaming surfactant is 0.05 to 3 weight parts, on a dry basis, per 100 dry weight parts of the polymeric binder.

4. The composition of claims 1-2, where the foaming surfactant is 0.1 to 1.5 weight parts, on a dry basis, per 100 dry weight parts of the polymeric binder.

5. The composition of claims 1-4, further including a thickener.

6. The composition of claims 1-5, where the filler is 100 to 600 dry weight parts per 100 dry weight parts of the polymeric binder.

7. The composition of claims 1-6, where the polymeric binder includes a synthetic latex.

8. The composition of claim 7, where the synthetic latex includes copolymerized styrene and butadiene.

9. The composition of claims 1-8, where the polymeric binder has a Tg from -20 °C to 30 °C.

10. The composition of claims 1-9, where the polymeric binder has a binder solids content of 40 weight percent to 75 weight percent based on a total weight of the polymeric binder.

11. The composition of claims 1-10, where carpet backing composition has 11% to 67% by weight of the polymeric binder and 33% to 89% by weight of the filler, based on a total weight of the polymeric binder and the filler.

12. The composition of claims 1-11, where the carpet backing composition has a viscosity of 2,000 cP to 75,000 cP (Viscosity measured as disclosed in the description).

13. A carpet product prepared with the carpet backing composition of claims 1-12.

14. The carpet product of claim 13, where the carpet backing composition of claims 1-12 is used as a pre-coat binder.

15. The carpet product of claims 13-14, where the carpet backing composition of claims 1-12 is used as a secondary backing binder.

16. The carpet product of claims 13-15, where the carpet backing composition is applied in an amount from 10 ounces per square yard to 40 ounces per square yard, dry basis, to the carpet product.

17. A method for producing a carpet product, comprising:
using the carpet backing composition of claims 1-12 to produce the carpet product.

18. The method of claim 17, including making the carpet backing composition by:
mixing a binding amount of a polymeric binder with a filler and a foaming surfactant that consists essentially of a linear or branched alkyl sulfate or sulfonate having a chain length of primarily eight carbon atoms.

19. The method of claim 18, including blending a gas into the carpet backing composition to froth the carpet backing composition.

20. The method of claim 19, including applying the froth of the carpet backing composition to a rear of a carpet backing to embed yam of the carpet backing in the carpet backing composition; and
drying the resultant carpet construction.

## Patentansprüche

1. Zusammensetzung für eine Beschichtung für eine Teppichrückenseite bzw. Teppichträger, umfassend:
eine bindende Menge eines Polymerbindemittels;
einen Füllstoff; und
eine schäumende oberflächenaktive Verbindung, welche im Wesentlichen aus gradkettigen oder verzweigten Alkylsulfat oder Alkylsulfonat besteht, mit einer Kettenlänge von im Wesentlichen acht Kohlenstoffatomen.

2. Zusammensetzung nach Anspruch 1, wobei die Zusammensetzung für die Teppichrückenseite einen Verdicker umfasst, und wobei das anionische oberflächenaktive Mittel Natriumoctylsulfat ist.

3. Zusammensetzung nach Anspruch 1 oder 2, wobei das schäumende oberflächenaktive Mittel 0,05 bis 3 Gew.-% auf einer trockenen Basis pro 100 trockene Gewichtsteile des polymeren Bindemittels beträgt.

4. Zusammensetzung nach Anspruch 1 bis 2, wobei das schäumende oberflächenaktive Mittel 0,1 bis 1,5 Gewichtsteile auf einer trockenen Basis pro 100 trockene Gewichtsteile des polymeren Bindemittels beträgt.

5. Zusammensetzung nach Anspruch 1 bis 4, des Weiteren umfassend ein Verdickungsmittel.

6. Zusammensetzung nach den Ansprüchen 1 bis 5, wobei der Füllstoff 100 bis 600 trockene Gewichtsteile pro 100 trockene Gewichtsteile des polymeren Bindemittels beträgt.

7. Zusammensetzung nach den Ansprüchen 1 bis 6, wobei das polymere Bindemittel ein synthetisches Latex enthält.

8. Zusammensetzung nach Anspruch 7, wobei das synthetische Latex copolymerisiertes Styrol und Butadien enthält.

9. Zusammensetzung nach Anspruch 1 bis 8, wobei das polymere Bindemittel eine Tg von -20°C bis 30°C aufweist.

10. Zusammensetzung nach Anspruch 1 bis 9, wobei das polymere Bindemittel einen Bindemittelfeststoffanteil von 40 Gew.-% bis 75 Gew.-% bezogen auf ein Gesamtgewicht des polymeren Bindemittels besitzt.

11. Zusammensetzung nach den Ansprüchen 1 bis 10, wobei die Zusammensetzung der Teppichrückseite 11 % bis 67 Gew.-% des polymeren Bindemittels und 33 bis 89 Gew.-% des Füllstoffes aufweist, bezogen auf ein Gesamtgewicht des polymeren Bindemittels und des Füllstoffs.

12. Zusammensetzung nach den Ansprüchen 1 bis 11, wobei die Zusammensetzung der Teppichrückseite eine Viskosität von 2.000 cP bis 75.000 cP aufweist (Viskosität gemessen wie in der Beschreibung offenbart).

13. Teppichprodukt hergestellt mit der Zusammensetzung der Teppichrückseite nach den Ansprüchen 1 bis 12.

14. Teppichprodukt nach Anspruch 13, wobei die Zusammensetzung der Teppichrückseite nach den Ansprüchen 1 bis 12 als vorbeschichtetes Bindemittel verwendet ist.

15. Teppicherzeugnis nach den Ansprüchen 13 bis 14, wobei die Zusammensetzung der Teppichrückseite gemäß der Ansprüche 1 bis 12 als ein sekundäres Rückseitenbindemittel eingesetzt ist.

16. Teppicherzeugnis nach den Ansprüchen 13 bis 15, wobei die Zusammensetzung de Teppichrückseite in einer Menge von 10 Unzen je Quadratyard bis 40 Unzen je Quadratyard, auf einer trockenen Basis, auf das Teppicherzeugnis aufgebracht ist.

17. Verfahren zur Herstellung eines Teppicherzeugnisses umfassend:
Verwenden der Zusammensetzung der Teppichrückseite gemäß der Ansprüche 1 bis 12 um das Teppicherzeugnis herzustellen.

18. Verfahren nach Anspruch 17, umfassend das Herstellen der Zusammensetzung der Teppichrückseite durch:
Mischen einer bindenden Menge eines polymeren Bindemittels mit einem Füllstoff und einem schäumenden oberflächenaktiven Mittel, welches im Wesentlichen aus einem gradlinigen oder einem verzweigten Alkylsulfat oder Sulfonat besteht, mit einer Kettenlänge von im Wesentlichen acht Kohlenstoffatomen.

19. Verfahren nach Anspruch 18, umfassend dasMischen eines Gases in die Zusammensetzung der Teppichrückseite, um die Zusammensetzung der Teppichrückseite aufzuschäumen.

20. Verfahren nach Anspruch 19, umfassend das Aufbringen des Schaums der Teppichrückseitenzusammensetzung auf eine Unterseite einer Teppichrückseite, um das Garn der Teppichrückseite in die Teppichrückseitenzusammensetzung einzubetten; und
Trocknen der resultierenden Teppichkonstruktion.

## Revendications

1. Composition d'endos de tapis, comprenant :
une quantité liante d'un liant polymère ;
une charge ; et
un agent tensio-actif moussant qui est essentiellement constitué d'un sulfate ou sulfonate d'alkyle linéaire ou ramifié présentant principalement une longueur de chaîne de huit atomes de carbone.

2. Composition selon la revendication 1, la composition d'endos de tapis incluant un épaississant, et l'agent tensio-actif anionique est l'octylsulfate de sodium.

3. Composition selon les revendications 1 à 2, dans laquelle l'agent tensio-actif moussant représente 0,05 à 3 parties en poids, sur une base sèche, pour 100 parties en poids sec du liant polymère.

4. Composition selon les revendications 1 à 2, dans laquelle l'agent tensio-actif moussant représente 0,1 à 1,5 parties en poids, sur une base sèche, pour 100 parties en poids sec du liant polymère.

5. Composition selon les revendications 1 à 4, incluant également un épaississant.

6. Composition selon les revendications 1 à 5, dans laquelle la charge représente 100 à 600 parties en poids sec pour 100 parties en poids sec du liant polymère.

7. Composition selon les revendications 1 à 6, dans laquelle le liant polymère inclut un latex synthétique.

8. Composition selon la revendication 7, dans laquelle le latex synthétique inclut du styrène et du butadiène copolymérisés.

9. Composition selon les revendications 1 à 8, dans laquelle le liant polymère a une Tg de - 20 °C à 30 °C.

10. Composition selon les revendications 1 à 9, dans laquelle le liant polymère a une teneur en liant solide de 40 pour-cent en poids à 75 pour-cent en poids basé sur le poids total du liant polymère.

11. Composition selon les revendications 1 à 10, dans laquelle la composition d'endos de tapis comporte 11 % à 67 % en poids du liant polymère et 33 % à 89 % en poids de la charge, sur la base du poids total du liant polymère et de la charge.

12. Composition selon les revendications 1 à 11, dans laquelle la composition d'endos de tapis présente une viscosité de 2 000 cP à 75 000 cP (viscosité mesurée comme décrit dans la description).

13. Produit de tapis préparé avec la composition d'endos de tapis des revendications 1 à 12.

14. Produit de tapis selon la revendication 13, dans lequel la composition d'endos de tapis des revendications 1 à 12 est utilisée comme liant de précouche.

15. Produit de tapis selon les revendications 13 à 14, dans lequel la composition d'endos de tapis des revendications 1 à 12 est utilisée comme liant d'endos secondaire.

16. Produit de tapis selon les revendications 13 à 15, dans lequel la composition d'endos de tapis est appliquée dans une quantité de 10 onces par yard carré à 40 onces par yard carré, sur une base sèche, sur le produit de tapis.

17. Procédé pour produire un produit de tapis, comprenant l'étape consistant à :
utiliser la composition d'endos de tapis des revendications 1 à 12 pour produire le produit de tapis.

18. Procédé selon la revendication 17, incluant la fabrication de la composition d'endos de tapis en :
mélangeant une quantité liante d'un liant polymère avec une charge et un agent tensio-actif moussant
qui est essentiellement constitué d'un sulfate ou sulfonate d'alkyle linéaire ou ramifié présentant principalement une longueur de chaîne de huit atomes de carbone.

19. Procédé selon la revendication 18, incluant le mélange d'un gaz dans la composition d'endos de tapis pour faire mousser la composition d'endos de tapis.

20. Procédé selon la revendication 19, incluant les étapes consistant à appliquer la mousse de la composition d'endos de tapis sur un arrière d'un endos de tapis pour enrober le fil de l'endos de tapis dans la composition d'endos de tapis ; et
sécher la construction de tapis résultante.
